# EUROPEAN PATENT APPLICATION

(11) **EP 4 401 477 A1**
(43) Date of publication of application: **17.07.2024**
(21) Application number: 22865125.3
(22) Date of filing: 06.09.2022
(51) Int. Cl.: H04W 56/00, H04W 76/40, H04W 4/06, H04W 88/08

(54) **METHOD AND APPARATUS FOR PROVIDING MBS IN WIRELESS COMMUNICATION SYSTEM**

(30) Priority: 06.09.2021 KR 20210118563
(71) Applicant: LG Electronics Inc., Yeongdeungpo-gu Seoul 07336 (KR)
(72) Inventor: BYUN, Daewook, Seoul 06772 (KR); HWANG, Seunggye, Seoul 06772 (KR); XU, Jian, Seoul 06772 (KR); KIM, Seokjung, Seoul 06772 (KR)
(74) Representative: Frenkel, Matthias Alexander
(86) International application number: PCT/KR2022/013310
(87) International publication number: WO 2023/033623

(57) **Abstract**

A method of operating a central unit (CU) in a wireless communication system may comprise the CU obtaining reference time information from each of at least one distributed unit (DU), the CU receiving a multicast broadcast service (MBS) provision request information from an access and mobility management function (AMF), performing at least one of coordination or synchronization through the reference time information obtained from each of the at least one DU, based on an MBS provision area including a plurality of DUs based on the MBS provision request information, and transmitting information for MBS provision to each of the at least one DU.

## Description

### Technical Field

The following description relates to a wireless communication system and a method and apparatus for providing a multicast/broadcast service (MBS). Specifically, it relates to a method and apparatus for providing an MBS from a base station composed of one central unit (CU) and a plurality of distributed units (DUs) to a terminal.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure relates to a method and apparatus for providing an MBS service in a wireless communication system.

The present disclosure relates to a method and apparatus for providing an MBS service through a base station composed of one central unit (CU) and at least one distribute unit (DU) in a wireless communication system.

The present disclosure relates to a method and apparatus for performing synchronized transmission in a plurality of DUs when an MBS provision area includes the plurality of DUs in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method of operating a central unit (CU) in a wireless communication system may comprise the CU obtaining reference time information from each of at least one distributed unit (DU), the CU receiving a multicast broadcast service (MBS) provision request information from an access and mobility management function (AMF), performing at least one of coordination or synchronization through the reference time information obtained from each of the at least one DU, in case that an MBS provision area includes a plurality of DUs based on the MBS provision request information, and transmitting information for MBS provision to each of the at least one DU.

As an example of the present disclosure, a central unit (CU) operating in a wireless communication system may comprise at least one transceiver, at least one processor and at least one memory operatively connected to the at least one processor and configured to store instructions that, when executed, cause the at least one processor to perform a specific operation. The specific operation may comprise controlling the transceiver to obtain reference time information from each of at least one distributed unit (DU), controlling the transceiver to receive a multicast broadcast service (MBS) provision request information from an access and mobility management function (AMF), performing at least one of coordination or synchronization through the reference time information obtained from each of the at least one DU, in case that an MBS provision area includes a plurality of DUs based on the MBS provision request information, and controlling the transceiver to transmit information for MBS provision to each of the at least one DU.

As an example of the present disclosure, a method of operating a terminal in a wireless communication system may comprise the terminal receiving at least one of coordination/synchronization information, a multicast/broadcast service (MBS) service identity information or cell list information from a distributed unit (DU), and the terminal receiving a data packet based on the MBS service in an MBS provision area. In case that the MBS provision area includes a plurality of DUs, a transmission time of the data packet may be determined to be the same in the plurality of DUs through a central unit (CU).

As an example of the present disclosure, a terminal operating in a wireless communication system may comprise at least one transceiver, at least one processor, and at least one memory operatively connected to the at least one processor and configured to store instructions that, when executed, cause the at least one processor to perform a specific operation. The specific operation may comprise controlling the transceiver to receive at least one of coordination/synchronization information, a multicast/broadcast service (MBS) service identity information or cell list information, and controlling the transceiver to receive a data packet based on the MBS service in an MBS provision area. In case that the MBS provision area includes a plurality of DUs, a transmission time of the data packet may be determined to be the same in the plurality of DUs through a central unit (CU).

As an example of the present disclosure, an apparatus may comprise at least one memory and at least one processor functionally connected to the at least one memory. The at least one processor may control the apparatus to obtain reference time information from each of at least one distributed unit (DU), receive a multicast broadcast service (MBS) provision request information from an access and mobility management function (AMF), perform at least one of coordination or synchronization through the reference time information obtained from each of the at least one DU, in case that an MBS provision area includes a plurality of DUs based on the MBS provision request information, and transmit information for MBS provision to each of the at least one DU.

As an example of the present disclosure, a non-transitory computer-readable medium storing at least one instruction may comprise the at least one instruction executable by a processor. The at least one instruction may control an apparatus to obtain reference time information from each of at least one distributed unit (DU), receive a multicast broadcast service (MBS) provision request information from an access and mobility management function (AMF), perform at least one of coordination or synchronization through the reference time information obtained from each of the at least one DU, based on an MBS provision area including a plurality of DUs based on the MBS provision request information, and transmit information for MBS provision to each of the at least one DU.

The following matters may be commonly applied.

As an example of the present disclosure, the MBS provision request information may comprise at least one of a service identity identifying a first MBS service or a list of cells specifying the first MBS service provision area.

As an example of the present disclosure, the MBS provision request information may be transferred from the AMF to the CU based on at least one of a multimedia broadcast and multicast service (MBMS) session start request message or an MBMS session update request message.

As an example of the present disclosure, the reference time information received from each of the at least one DU may comprise at least one of a system frame number (SFN), a subframe index or slot information.

As an example of the present disclosure, the coordination and the synchronization may be performed using at least one of the SFN, the subframe index or the slot.

As an example of the present disclosure, the information for MBS provision transmitted from the CU to each of the at least one DU may comprise at least one of a time indication, a service identity or a list of cells.

As an example of the present disclosure, each of the at least one DU may determine a transmission time of a data packet for a first MBS service based on the received information for MBS provision

As an example of the present disclosure, , based on the CU receiving first reference time information from a first DU among the at least one DU and receiving second reference time information from a second DU among the at least one DU, the CU may perform at least one of the coordination or the synchronization such that the first DU and the second DU simultaneously transmit data packets for the first MBS service through the first reference time information and the second reference time information.

As an example of the present disclosure, the CU may transmit first time indication information to the first DU and transmit second time indication information to the second DU based on at least one of the coordination or the synchronization.

As an example of the present disclosure, the first DU may determine a transmission time of the data packet for the first MBS service based on the first time indication information, and the second DU may determine a transmission time of the data packet for the first MBS service based on the second time indication information.

As an example of the present disclosure, the transmission time of the data packet by the first DU may be determined to be the same as the transmission time of the data packet by the second DU.

As an example of the present disclosure, the first time indication information and the second time indication information may be different.

As an example of the present disclosure, the information for MBS provision transmitted to each of the at least one DU may be transmitted to terminals respectively connected to the at least one DU.

As an example of the present disclosure, based on the MBS provision area including only one DU based on the MBS provision request information, the CU may not perform the coordination and the synchronization.

### Advantageous Effects

In the present disclosure, it is possible to provide an MBS service in a wireless communication system.

In the present disclosure, it is possible to provide an MBS service through a base station composed of one central unit (CU) and at least one distribute unit (DU).

In the present disclosure, it is possible to perform synchronized transmission in a plurality of DUs when an MBS provision area includes the plurality of DUs in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

Effects obtained in the present disclosure are not limited to the above-mentioned effects, and other effects not mentioned above may be clearly derived and understood by those skilled in the art, to which a technical configuration of the present disclosure is applied, from the following description of embodiments of the present disclosure. That is, effects, which are not intended when implementing a configuration described in the present disclosure, may also be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.
FIG. 1 is a view illustrating various reference points.
FIG. 2 is a view illustrating an example of a network structure of an evolved universal terrestrial radio access network (E-UTRAN) to which the present disclosure is applicable.
FIG. 3 is a view illustrating a general E-URTAN and an example of an architecture of an evolved packet core (EPC).
FIG. 4 is a view illustrating an example of a structure of a radio interface protocol in a control plane between user equipment (UE) and evolved node B (eNB).
FIG. 5 is a view illustrating an example of a structure of a radio interface protocol in a user plane between UE and eNB.
FIG. 6 is a view illustrating an example of an architecture of a general new radio (NR)-radio access network (RAN).
FIG. 7 is a view illustrating an example of functional separation of a general NG-RAN and a 5th generation core (5GC).
FIG. 8 is a view illustrating an example of a general architecture of a 5th generation (5G) system.
FIG. 9 is a view illustrating an example of a wireless device applicable to the present disclosure.
FIG. 10 is a block diagram showing a network node according to an embodiment of the present disclosure.
FIG. 11 is a diagram showing a method of, at a CU applicable to the present disclosure, requesting reference time information from a DU.
FIG. 12 is a diagram showing a method of, at a DU applicable to the present disclosure, reporting reference time information to a CU.
FIG. 13 is a diagram showing a method of receiving an MBS based on mobility of a terminal applicable to the present disclosure.
FIG. 14 is a diagram showing a case where an MBS provision area applicable to the present disclosure includes a plurality of gNBDUs.
FIG. 15 is a flowchart showing a method of providing an MBS applicable to the present disclosure.
FIG. 16 is a flowchart showing a method of providing an MBS applicable to the present disclosure.

### Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit" "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station" "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx' means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

### 3GPP LTE/EPS

3GPP TS 36.211: Physical channels and modulation
3GPP TS 36.212: Multiplexing and channel coding
3GPP TS 36.213: Physical layer procedures
3GPP TS 36.214: Physical layer; Measurements
3GPP TS 36.300: Overall description
3GPP TS 36.304: User Equipment (UE) procedures in idle mode
3GPP TS 36.306: User Equipment (UE) radio access capabilities
3GPP TS 36.314: Layer 2 - Measurements
3GPP TS 36.321: Medium Access Control (MAC) protocol
3GPP TS 36.322: Radio Link Control (RLC) protocol
3GPP TS 36.323: Packet Data Convergence Protocol (PDCP)
3GPP TS 36.331: Radio Resource Control (RRC) protocol
3GPP TS 36.413: S1 Application Protocol (S1AP)
3GPP TS 36.423: X2 Application Protocol (X2AP)
3GPPP TS 22.125: Unmanned Aerial System support in 3GPP; Stage 1
3GPP TS 23.303: Proximity-based services (Prose); Stage 2
3GPP TS 23.401: General Packet Radio Service (GPRS) enhancements for Evolved Universal Terrestrial Radio Access Network (E-UTRAN) access
3GPP TS 23.402: Architecture enhancements for non-3GPP accesses
3GPP TS 23.286: Application layer support for V2X services; Functional architecture and information flows
3GPP TS 24.301: Non-Access-Stratum (NAS) protocol for Evolved Packet System (EPS); Stage 3
3GPP TS 24.302: Access to the 3GPP Evolved Packet Core (EPC) via non-3GPP access networks; Stage 3
3GPP TS 24.334: Proximity-services (ProSe) User Equipment (UE) to ProSe function protocol aspects; Stage 3
3GPP TS 24.386: User Equipment (UE) to V2X control function; protocol aspects; Stage 3

### 3GPP NR/SGS

3GPP TS 38.211: Physical channels and modulation
3GPP TS 38.212: Multiplexing and channel coding
3GPP TS 38.213: Physical layer procedures for control
3GPP TS 38.214: Physical layer procedures for data
3GPP TS 38.215: Physical layer measurements
3GPP TS 38.300: NR and NG-RAN Overall Description
3GPP TS 38.304: User Equipment (UE) procedures in idle mode and in RRC inactive state
3GPP TS 38.321: Medium Access Control (MAC) protocol
3GPP TS 38.322: Radio Link Control (RLC) protocol
3GPP TS 38.323: Packet Data Convergence Protocol (PDCP)
3GPP TS 38.331: Radio Resource Control (RRC) protocol
3GPP TS 37.324: Service Data Adaptation Protocol (SDAP)
3GPP TS 37.340: Multi-connectivity; Overall description
3GPP TS 23.501: System Architecture for the 5G System
3GPP TS 23.502: Procedures for the 5G System
3GPP TS 23.503: Policy and Charging Control Framework for the 5G System; Stage 2
3GPP TS 24.501: Non-Access-Stratum (NAS) protocol for 5G System (5GS); Stage 3
3GPP TS 24.502: Access to the 3GPP 5G Core Network (5GCN) via non-3GPP access networks
3GPP TS 24.526: User Equipment (UE) policies for 5G System (5GS); Stage 3

### 3GPP V2X

3GPP TS 23.285: Architecture enhancements for V2X services
3GPP TR 23.786: Evolved Packet System (EPS) and the 5G System (5GS) to support advanced V2X services
3GPP TS 23.287: Architecture enhancements for 5G System (5GS) to support Vehicle-to-Everything (V2X) services
3GPP TS 24.587: Vehicle-to-Everything (V2X) services in 5G System (5GS); Protocol aspects; Stage 3
3GPP TS 24.588: Vehicle-to-Everything (V2X) services in 5G System (5GS); User Equipment (UE) policies; Stage 3

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

### 5G System Architecture to which the Present Disclosure is Applicable

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

### Overview of 3GPP System

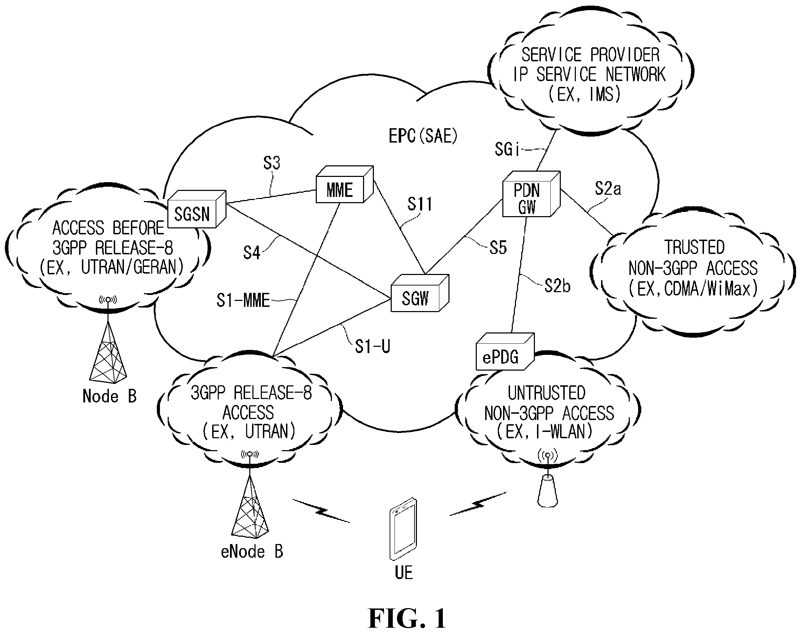

FIG. 1 illustrates various reference points.

An example of the network structure of FIG. 1 discloses an LTE/EPS-based network structure, and may operate with reference to matters described in standard documents published before this document. In the network structure of FIG. 1, at least one of SGW, PDN GW, MME, SGSN, and ePDG entities may operate with reference to matters described in standard documents published before this document. In addition, S1-MME, S1-U, S2a, S2b, S3, S4, S5, S11, and SGi may exist as interfaces between each entity, which are described in the standard document published before this document. can do. In addition, other entities and interfaces may be configured with reference to matters described in standard documents published before this document described above, and are not limited to specific forms.

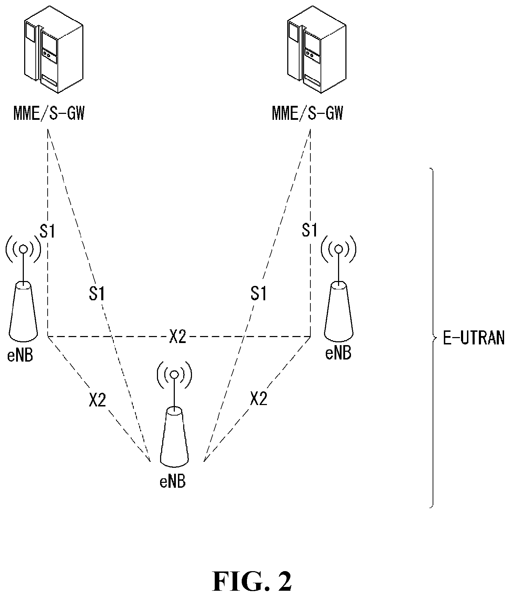

FIG. 2 illustrates an example of a network structure of an evolved universal terrestrial radio access network (E-UTRAN) to which the present disclosure is applicable.

An E-UTRAN system is an evolved version of the existing UTRAN system and may be, for example, 3GPP LTE/LTE-A system. Communication networks are widely deployed to provide various communication services such as voice (e.g., voice over Internet protocol (VoIP)) through IMS and packet data.

Referring to FIG. 2, an E-UMTS network includes an E-UTRAN, an EPC, and one or more UEs. The E-UTRAN consists of eNBs that provide control plane and user plane protocols to the UE, and the eNBs are interconnected with each other by means of the X2 interface, and reference may be made to matters described in standard documents published before this document.

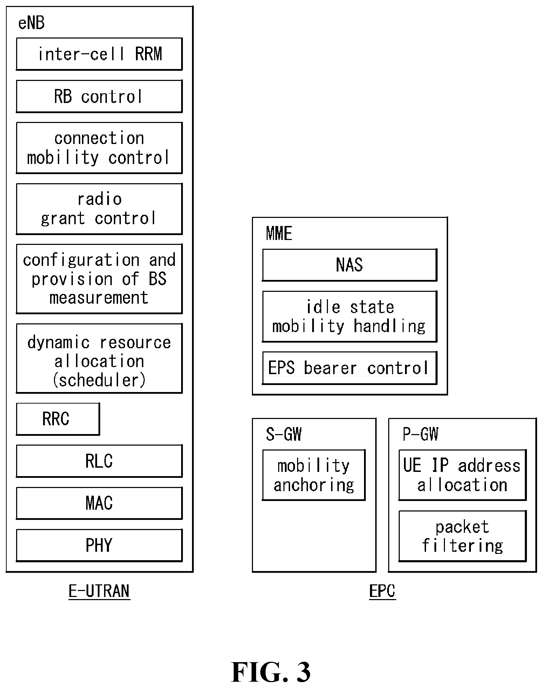

FIG. 3 is a view illustrating a general E-URTAN and an example of an architecture of an evolved packet core (EPC).

As illustrated in FIG. 3, the eNB can perform functions such as routing to gateway while radio resource control (RRC) connection is activated, scheduling and transmission of paging messages, scheduling and transmission of a broadcast channel (BCH), dynamic allocation of resources in uplink and downlink to the UE, configuration and provision for the measurement of the eNB, radio bearer control, radio admission control, and connection mobility control. The eNB can perform functions such as paging situation in the EPC, management of an LTE IDLE state, ciphering of a user plane, SAE bearer control, and ciphering and integrity protection of NAS signaling.

Annex J of 3GPP TR 23.799 shows various architectures combining 5G and 4G. And 3GPP TS 23.501 shows an architecture using NR and NGC.

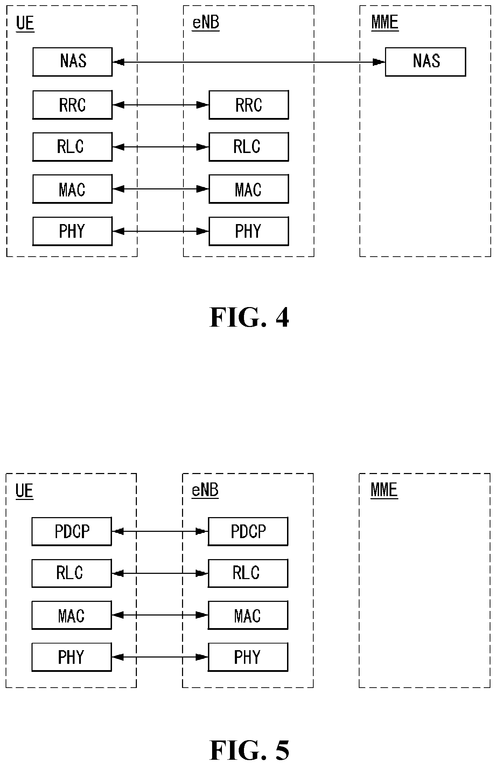

FIG. 4 is a view illustrating an example of a structure of a radio interface protocol in a control plane between user equipment (UE) and evolved node B (eNB), and FIG. 5 is view illustrating an example of a structure of a radio interface protocol in a user plane between UE and eNB.

The radio interface protocol is based on 3GPP radio access network standard. The radio interface protocol horizontally consists of a physical layer, a data link layer, and a network layer, and is vertically divided into a user plane for data information transmission and a control plane for control signaling delivery.

The protocol layers may be divided into L1 (first layer), L2 (second layer), and L3 (third layer) based upon three lower layers of an open system interconnection (OSI) standard model that is well known in the art of communication systems, and it is possible to refer to the matters described in the standard document published before this document described above.

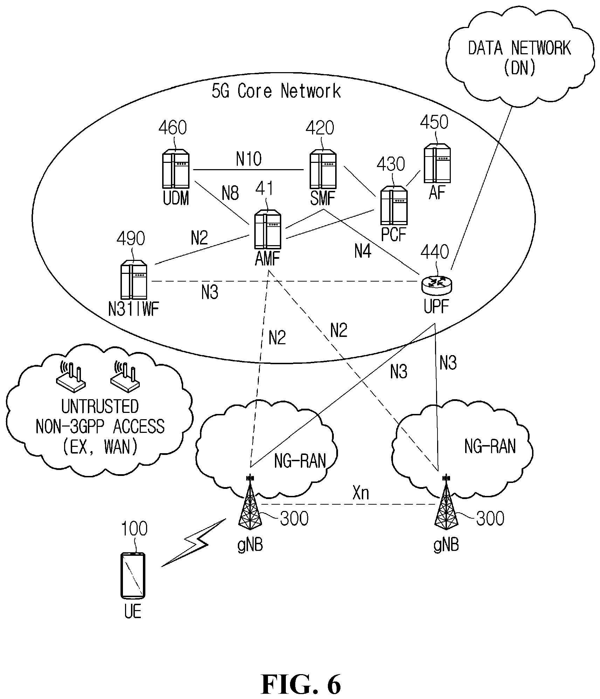

FIG. 6 is a view illustrating an example of a wireless communication system that is applied to the present disclosure.

5GC (5G Core) may include various components, part of which are shown in FIG. 6, including an access and mobility management function (AMF) 410, a session management function (SMF) 420, a policy control function (PCF) 430, a Prose user plane function (UPF) 440, an application function (AF) 450, unified data management (UDM) 460, and a non-3GPP interworking function (N3IWF) 490.

A UE 100 is connected to a data network via the UPF 440 through a next generation radio access network (NG-RAN) including the gNB 300. The UE 100 may be provided with a data service even through untrusted non-3GPP access, e.g., a wireless local area network (WLAN). In order to connect the non-3GPP access to a core network, the N3IWF 490 may be deployed.

The N3IWF 490 performs a function of managing interworking between the non-3GPP access and the 5G system. When the UE 100 is connected to non-3GPP access (e.g., WiFi referred to as IEEE 801.11), the UE 100 may be connected to the 5G system through the N3IWF 490. The N3IWF 490 performs control signaling with the AMF 410 and is connected to the UPF 440 through an N3 interface for data transmission.

The AMF 410 may manage access and mobility in the 5G system. The AMF 410 may perform a function of managing (non-access stratum) NAS security. The AMF 410 may perform a function of handling mobility in an idle state.

The UPF 440 performs a function of gateway for transmitting and receiving user data. The UPF node 440 may perform the entirety or a portion of a user plane function of a serving gateway (S-GW) and a packet data network gateway (P-GW) of 4G mobile communication.

The UPF 440 is a component that operates as a boundary point between a next generation radio access network (NG-RAN) and the core network and maintains a data path between the gNB 300 and the SMF 420. In addition, when the UE 100 moves over an area served by the gNB 300, the UPF 440 serves as a mobility anchor point. The UPF 440 may perform a function of handling a PDU. For mobility within the NG-RAN (which is defined after 3GPP Release-15), the UPF 440 may route packets. In addition, the UPF 440 may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF 440 may correspond to a termination point of a data interface toward the data network.

The PCF 430 is a node that controls an operator's policy. The AF 450 is a server for providing various services to the UE 100. The UDM 460 is a server that manages subscriber information, such as home subscriber server (HSS) of 4G mobile communication. The UDM 460 stores and manages the subscriber information in a unified data repository (UDR).

The SMF 420 may perform a function of allocating an Internet protocol (IP) address of the UE 100. In addition, the SMF 420 may control a packet data unit (PDU) session.

For convenience of explanation, hereinafter, reference numerals may be omitted for AMF 410, SMF 420, PCF 430, UPF 440, AF 450, UDM 460, N3IWF 490, gNB 300, or UE 100, which may operate with reference to contents described in standard documents released earlier than the present document.

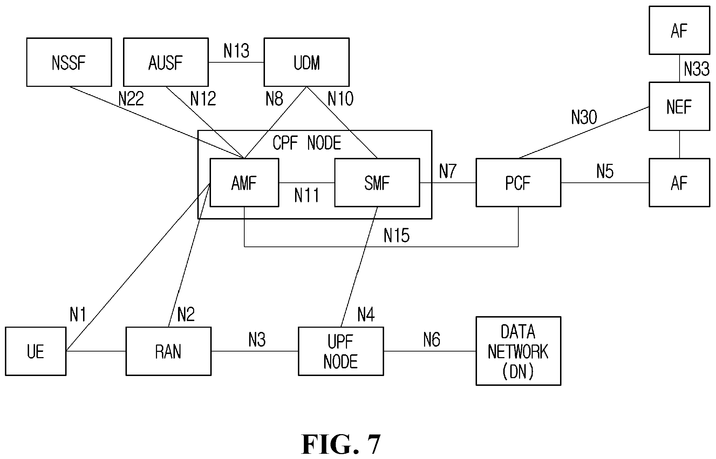

FIG. 7 is a view illustrating an example expressing a structure of a wireless communication system, which is applied to the present disclosure, from a node perspective.

Referring to FIG. 7, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 7 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

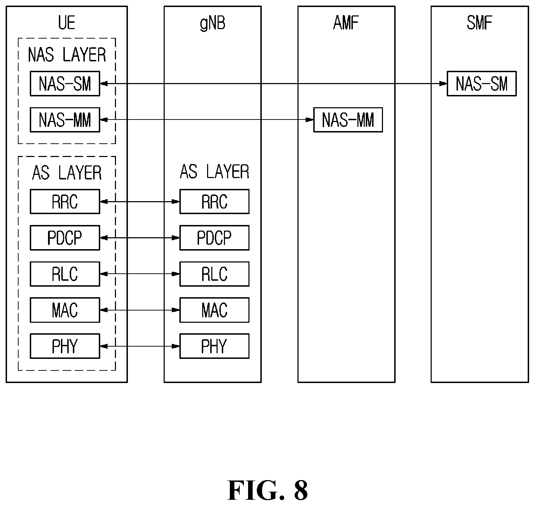

Hereinafter, the present disclosure will describe each layer of a radio protocol. FIG. 8 is a view illustrating an example of a radio interface protocol between UE and gBN.

Referring to FIG. 8, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

### Communication system applicable to the present disclosure

Although not limited thereto, various descriptions, functions, procedures, proposals, methods and/or operation flowcharts disclosed in the present disclosure are applicable to various fields requiring wireless communication/connection (e.g., 5G) between devices.

Hereinafter, it will be described in greater detail with reference to the drawings. In the following drawings/description, the same reference numerals may denote the same or corresponding hardware blocks, software blocks or functional blocks unless otherwise stated.

### Communication system applicable to the present disclosure

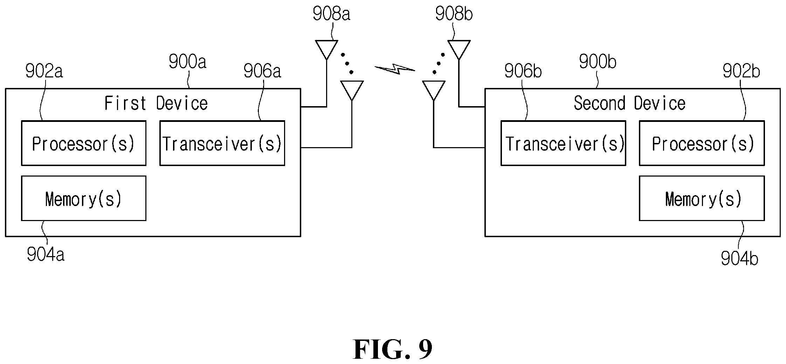

FIG. 9 is a view showing an example of a wireless device applicable to the present disclosure.

Referring to FIG. 9, a first wireless device 900a and a second wireless device 900b may transmit and receive radio signals through various radio access technologies (e.g., LTE or NR). Here, {the first wireless device 900a, the second wireless device 900b} may correspond to {the wireless device 100x, the base station 90} and/or {the wireless device 100x, the wireless device 100x}.

The first wireless device 900a may include one or more processors 902a and one or more memories 904a and may further include one or more transceivers 906a and/or one or more antennas 908a. The processor 902a may be configured to control the memory 904a and/or the transceiver 906a and to implement descriptions, functions, procedures, proposals, methods and/or operational flowcharts disclosed herein. For example, the processor 902a may process information in the memory 904a to generate first information/signal and then transmit a radio signal including the first information/signal through the transceiver 906a. In addition, the processor 902a may receive a radio signal including second information/signal through the transceiver 906a and then store information obtained from signal processing of the second information/signal in the memory 904a. The memory 904a may be coupled with the processor 902a, and store a variety of information related to operation of the processor 902a. For example, the memory 904a may store software code including instructions for performing all or some of the processes controlled by the processor 902a or performing the descriptions, functions, procedures, proposals, methods and/or operational flowcharts disclosed herein. Here, the processor 902a and the memory 904a may be part of a communication modem/circuit/chip designed to implement wireless communication technology (e.g., LTE or NR). The transceiver 906a may be coupled with the processor 902a to transmit and/or receive radio signals through one or more antennas 908a. The transceiver 906a may include a transmitter and/or a receiver. The transceiver 906a may be used interchangeably with a radio frequency (RF) unit. In the present disclosure, the wireless device may refer to a communication modem/circuit/chip.

The second wireless device 900b may include one or more processors 902b and one or more memories 904b and may further include one or more transceivers 906b and/or one or more antennas 908b. The processor 902b may be configured to control the memory 904b and/or the transceiver 906b and to implement the descriptions, functions, procedures, proposals, methods and/or operational flowcharts disclosed herein. For example, the processor 902b may process information in the memory 904b to generate third information/signal and then transmit the third information/signal through the transceiver 906b. In addition, the processor 902b may receive a radio signal including fourth information/signal through the transceiver 906b and then store information obtained from signal processing of the fourth information/signal in the memory 904b. The memory 904b may be coupled with the processor 902b to store a variety of information related to operation of the processor 902b. For example, the memory 904b may store software code including instructions for performing all or some of the processes controlled by the processor 902b or performing the descriptions, functions, procedures, proposals, methods and/or operational flowcharts disclosed herein. Herein, the processor 902b and the memory 904b may be part of a communication modem/circuit/chip designed to implement wireless communication technology (e.g., LTE or NR). The transceiver 906b may be coupled with the processor 902b to transmit and/or receive radio signals through one or more antennas 908b. The transceiver 906b may include a transmitter and/or a receiver. The transceiver 906b may be used interchangeably with a radio frequency (RF) unit. In the present disclosure, the wireless device may refer to a communication modem/circuit/chip.

In addition, the structure of a wireless device applicable to the present disclosure is not limited to FIG. 9, and may be configured in various forms. In particular, the present disclosure may be applied to a wireless device that performs an operation for transmitting and/or receiving a wireless signal, and is not limited to a specific form.

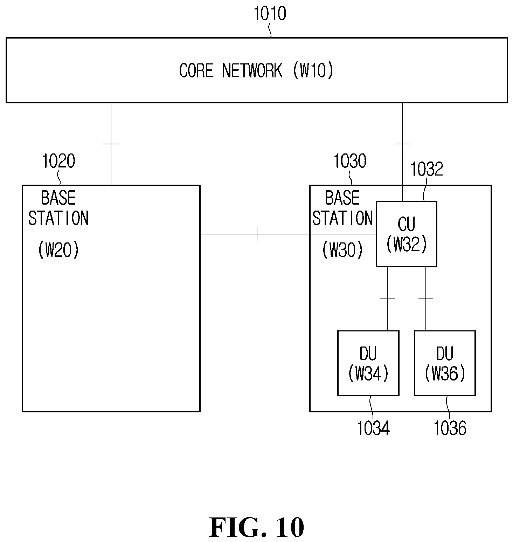

FIG. 10 is a block diagram showing a network node according to an embodiment of the present disclosure. Referring to FIG. 10, an interface may be configured between a core network 1010 and base stations 1020 and 1030. For example, the interface between the base stations 1020 and 1030 and the core network 1010 may be NG, and the interface between the base station 1032 and the neighboring base station 1030 may be Xn. However, each interface may not be limited to the above-mentioned name. That is, there may be an interface between the core network 1010 and the base stations 1020 and 1030 and between the base stations, and may not be limited to a specific embodiment. As an example, the base station 1030 may be divided into a central unit (CU) 1032 and at least one distributed unit (DU) 1034, 1036. That is, the base station 1030 may be hierarchically separated and operated. The CU 1032 may be connected to one or more DUs 1034 and 1036. Here, an interface may exist between the CU 1032 and at least one DU 1032, 1034. For example, the interface between the CU 1032 and at least one DU 1032, 1034 may be F1, but the name may not be limited to this. The CU 1032 may perform the functions of upper layers of the base station. At least one DU 1034, 1036 may perform the function of lower layers of the base station. The CU 1032 may be a logical node that hosts the radio resource control (RRC), service data adaptation protocol (SDAP), and packet data convergence protocol (PDCP) layers of a base station (e.g., gNB). Additionally, at least one DU 1034, 1036 may be a logical node that hosts the radio link control (RLC), media access control (MAC), and physical (PHY) layers of a base station. As another example, the CU 1032 may be a logical node that hosts the RRC and PDCP layers of a base station (e.g., en-gNB).

At this time, the operation of at least one DU 1034, 1036 may be partially controlled by the CU 1032. At least one DU 1034, 1036 may support one or more cells. On the other hand, one cell may be supported by only one DU 1034, 1036. At this time, as an example, at least one DU 1034, 1036 may be connected to one CU 1032. As another example, at least one DU 1034, 1036 may be connected to a plurality of CUs, and is not limited to a specific embodiment.

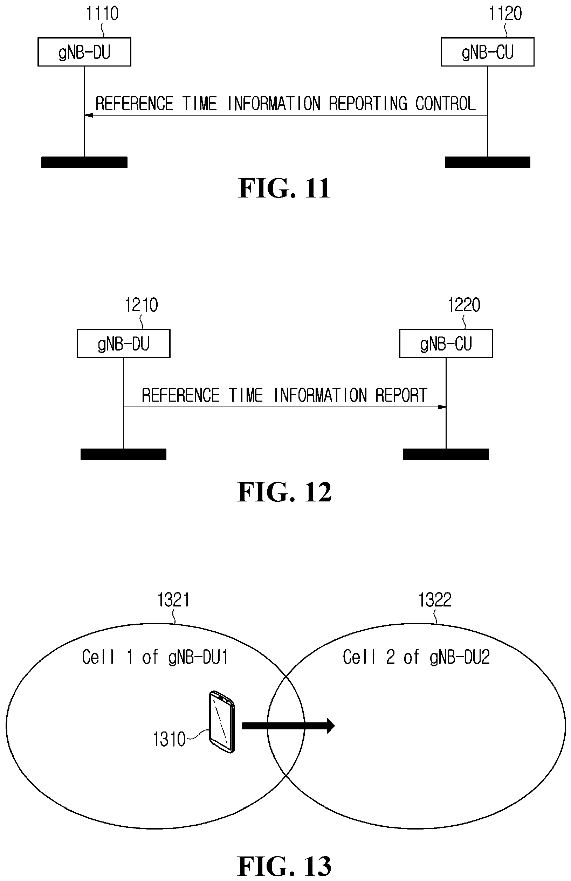

FIG. 11 is a diagram showing a method of, at a CU applicable to the present disclosure, requesting reference time information from a DU. Referring to FIG. 11, a gNBDU 1110 and a gNBCU 1120 may perform a reference time information reporting control procedure. Here, the reference time information reporting control procedure may be a procedure in which the gNBDU 1110 requests the gNBCU 1120 to report the requested reference time information, and may be signaling that is not associated with the terminal.

The gNBDU 1110 may receive a reference time information reporting control message from the gNBCU 1120. Here, if the gNBDU 1110 supports the reference time information reporting control procedure, the gNBDU 1110 may report the requested reference time information to the gNBCU 1120. That is, the gNBDU 1110 may receive a reference time information reporting control message from the gNBCU 1120 and perform a reference time information report based on it.

FIG. 12 is a diagram showing a method of, at a DU applicable to the present disclosure, reporting reference time information to a CU. Referring to FIG. 12, a gNBDU 1210 may perform a reference time information report procedure. Here, the reference time information report procedure may be a procedure in which the gNBDU 1210 reports reference time information to a gNBCU 1220, and may be signaling that is not associated with a terminal. The gNBDU 1210 may transmit a reference time information report message to the gNBCU 1220 based on a reference time information report procedure. As an example, the reference time information report is a response to the above-described reference time information reporting control message transmitted from the gNBCU 1220 to the gNBDU 1210 and may be transmitted from the gNBDU 1210 to the gNBCU 1220. At this time, as an example, the reference time information may include a system frame number (SFN) of the gNBDU 1210. That is, the gNBCU 1220 may recognize the SFN of each gNBDU based on the reference time information report, which will be described later.

As another example, the SFN may be supported considering intra CU or inter-DU scenarios. Here, the SFN may be used to maintain synchronization between the terminal and the base station, and the terminal and the base station may maintain synchronization based on the SFN while performing communication. As an example, the SFN may be used to support multiple cells at a gNBDU level.

Additionally, as an example, the MBS may be a service for transmitting the same content to a plurality of terminals through the same resource. In the following, a method of transmitting data packets based on the SFN when an area in which the MBS is provided includes a plurality of gNBDUs will be described.

As a specific example, a scenario in which the MBS is provided considering an inter gNBDU may be considered. The existing MBS provision area could be limited to one gNBDU, but a case where the MBS provision area includes a plurality of gNBDUs controlled by one gNBCU may be considered.

Here, when gNBDUs in the MBS provision area transmit data packets to the terminal without performing synchronized transmission, the terminal may receive data packets at different transmission times depending on the gNBDU receiving the data. For example, if the gNBDU is changed based on the mobility of the terminal, a problem may occur in which the terminal may receive already-received data packets in duplicate or may not continuously receive data packets that were not received. For this, a method of performing synchronized transmission between gNBDUs will be described below. As an example, FIG. 13 is a diagram showing a method of receiving an MBS based on the mobility of a terminal applicable to the present disclosure. Referring to FIG. 13, the service area for the MBS may include cell 1 1321 by gNBDU 1 and cell 2 1322 by gNBDU 2. Here, synchronization for data packet transmission may be required between gNBDU 1 and gNBDU 2. Specifically, if there is no synchronization for data packet transmission between gNBDU 1 and gNBDU 2, when a terminal 1310 moves from cell 1 1321 to cell 2 1322, the data packet may be lost or duplicate transmission of the same data packet may occur. In consideration of the above, when the MBS provision area includes a plurality of gNBDUs, a method of performing synchronization between gNBDUs may be necessary, and a method for this will be described below.

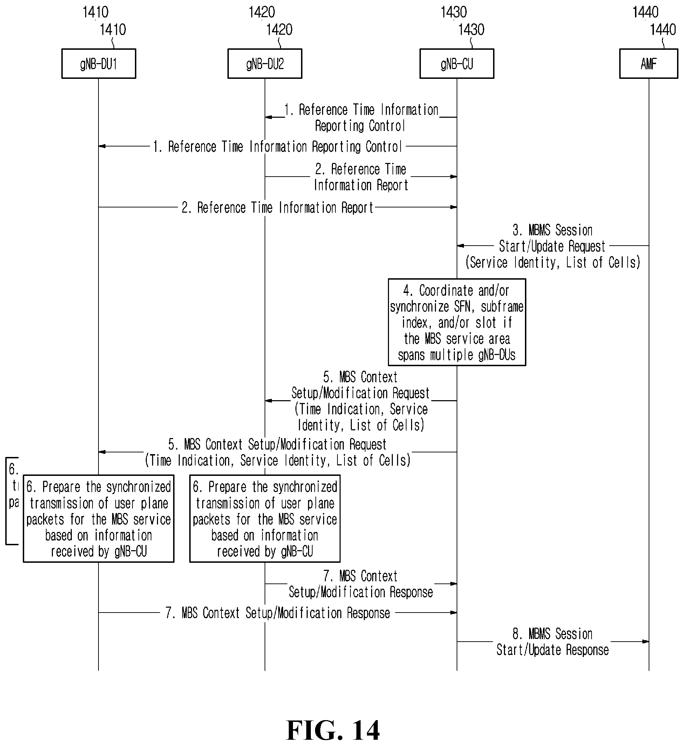

As an example, FIG. 14 is a diagram showing a case where an MBS provision area applicable to the present disclosure includes a plurality of gNBDUs. Referring to FIG. 14, a structure in which a plurality of gNBDUs (gNBDU 1 1410, gNBDU 2 1420) are controlled by one gNBCU 1430 may be considered. As an example, an MBS provision area may be set to a plurality of cells based on a specific MBS service. Here, each cell within the service provision area may be included in different gNBDUs. That is, the MBS provision area may not be one gNBDU, but may include a plurality of gNBDUs 1410 and 1420 controlled by one gNBCU 1430. As an example, as described above, a plurality of gNBDUs 1410 and 1420 controlled by one gNBCU 1430 and located in a specific MBS provision area needs to perform synchronized transmission such that duplication or omission of data packets is prevented even if the terminal moves to another cell. That is, in the plurality of gNBDUs 1410 and 1420, parameters may be equally maintained for transmission of the same data packets.

In consideration of the above, the gNBCU 1430 may obtain reference time information from each of the gNBDUs 1410 and 1420. Through this, the gNBCU 1430 may obtain SFN information of each of the gNBDU 1410 and 1420. As an example, based on FIGS. 11 and 12 described above, the gNBCU 1430 may transmit a reference time information reporting control message to the gNBDUs 1410 and 1420, and each of the gNBDUs 1410 and 1420 may transmit a reference time information report message to the gNBCU 1430. Through this, the gNBCU 1430 may recognize the SFN information of each of the gNBDU 1410 and 1420.

As another example, the gNBDUs 1410 and 1420 may periodically transmit a reference time information report message to the gNBCU 1430 without a request of the gNBCU 1430. That is, the reporting type of the reference time information report message transmitted by the gNBDUs 1410 and 1420 may be a periodic reporting type as well as an on-demand type, and is not limited to a specific embodiment. As another example, a new type of message may be used for the gNBDUs 1410 and 1420 to report reference time information to the gNBCU 1430, and may not be limited to a specific embodiment.

Additionally, as an example, the reference time information reported by the gNBDUs 1410 and 1420 to the gNBCU 1430 may be reference SFN information. As another example, the reference time information may be information based on at least one of an SFN, a subframe index, or slot information, and is not limited to a specific embodiment.

Here, the gNBCU 1430 may receive a multimedia broadcast and multicast service (MBMS) session start request message or an MBMS session update request message from an access and mobility management function (AMF) 1440. As another example, the AMF 1440 may transmit a new type of message for the MBS service to the gNBCU 1430, and is not limited to a specific embodiment.

Here, the MBMS session start request message or MBMS session update request message (or a new type of message) may include at least one of a service identity or a list of cells. The service identity may be an identity specifying a specific service of an MBS, and the list of cells may specify a list of cells where MBS is provided based on the service identity. That is, the gNBCU 1430 may recognize an MBS provision area based on the service identity and the list of cells. Here, since the gNBCU 1430 controls the gNBDUs 1410 and 1420, it may recognize each cell within the gNBDUs 1410 and 1420, and determine whether the MBS provision area includes the plurality of gNBDUs 1410 and 1420.

As an example, when the MBS provision area includes the plurality of gNBDUs 1410 and 1420, the gNBCU 1430 controlling the gNBDUs 1410 and 1420 may perform at least one of coordination or synchronization based on a reference time information report from each of the gNBDUs 1410 and 1420. As an example, the gNBCU 1430 may perform the above-described operation through at least one of the SFN, subframe index, or slot information for each of the gNBDUs 1410 and 1420. Here, the gNBCU 1430 may provide time indication information for performing coordination/synchronization to the gNBDUs 1410 and 1420 in an area where a specific MBS service is provided. That is, when cells in which MBS service is provided are included in different gNBDUs, the gNBCU 1430 controlling the gNBDUs 1410 and 1420 may provide time indication information for performing coordination/synchronization to the gNBDUs 1410 and 1420 in an area where a specific MBS is provided.

Here, as an example, time indication information indicated by the gNBCU 1430 may be different in the gNBDUs 1410 and 1420. Specifically, the reference times of the gNBDUs 1410 and 1420 may be different, and different time indication information may be transmitted considering the reference time information of each of the gNBDUs 1410 and 1420. As another example, time indication information indicated by the gNBCU 1430 may be different in each cell within the gNBDU. That is, each cell in each of the gNBDU 1410 and 1420 may obtain each time indication information and perform synchronization. Through the above, the gNBDUs 1410 and 1420 may transmit data packets to the terminal at the same time (or the same physical time) for a specific MBS service within the MBS provision area, thereby performing synchronized transmission. Additionally, the above-described service identity may be information for identifying a specific MBS service provided, and the list of cells may be information about cells in which the MBS is provided.

Here, as an example, the time indication information may include at least one of the above-described SFN, subframe index, or slot-related information. Specifically, the gNBCU 1430 may transmit an MBS context setup request message or an MBS context modification request including a time indication, a service identity, and a list of cells to the gNBDUs 1410 and 1420. The gNBCU 1430 may transmit a new type of message including a time indication, a service identity, and a list of cells to the gNBDUs 1410 and 1420, and is not limited to the above-described embodiment. Each of the gNBDUs 1410 and 1420 may check data packet transmission synchronization based on information received for the MBS service dfrom the gNBCU 1430. Thereafter, each of the gNBDUs 1410 and 1420 may complete setup by transmitting an MBS context setup response message or an MBS context modification response to the gNBCU 1430. At this time, each of the gNBDU 1410 and 1420 may store the above-described information until receiving a new message related to the MBS service, and perform synchronized transmission. Additionally, the gNBCU 1430 may transmit an MBMS session start response message or an MBMS session update response message to the AMF 1440 based on the response message received from each of the gNBDUs 1410 and 1420.

Based on the above, a plurality of gNBDUs controlled by one gNBCU included in the MBS provision area may transmit data packets at the same time, and through this, synchronized transmission may be performed in the gNBDUs. The terminal may receive data packets without loss regardless of the gNBDU that receives the data packets in the MBS provision area.

As another example, the gNBDU may provide coordination/synchronization information received from the gNBCU to the terminal. When the terminal obtains the above-described information from the gNBDU, the terminal may recognize that the data transmission times by a base station currently receiving a service for a specific MBS service and the adjacent base station are aligned, and may operate based on this. Also, as an example, the gNBDU may transfer cell list information for the MBS provision area to the terminal based on a specific MBS service. Through this, the terminal may check in which cell a specific MBS service is provided and maintained.

Here, as an example, the terminal may obtain the above-described information through a system information block (SIB) transmitted by the gNBDU. As another example, the above-described information may be provided to the terminal as auxiliary information based on terminal-dedicated signaling, and is not limited to a specific embodiment.

Additionally, as an example, when the gNBDU newly receives the above-described coordination/synchronization information or cell list information from the gNBCU, the gNBDU may transfer the above-described information to the terminal, and is limited to a specific embodiment.

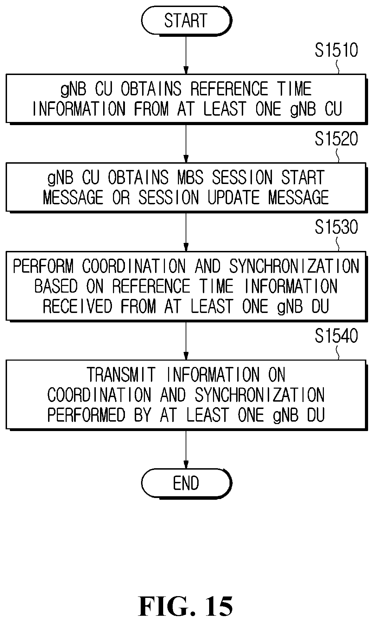

FIG. 15 is a flowchart showing a method of providing an MBS applicable to the present disclosure. Referring to FIG. 15, one gNBCU may control at least one gNBDU. Here, the gNBCU may obtain reference time information from at least one gNBDU (S1510). As an example, the reference time information may include at least one of an SFN, a subframe index, or slot information, and is not limited to a specific embodiment. Thereafter, the gNBCU may obtain an MBS session start message or MBS session update message. Here, the MBS session start message or MBS session update message may include a service identity specifying a specific MBS service and a list of cells in which the MBS service is provided, as described above. Here, the gNBCU may perform at least one of coordination or synchronization based on reference time information received from each of at least one gNBDU (S1530). Thereafter, the gNBCU may transmit information on coordination and synchronization performed by each of at least one gNBDU (S1540). Here, the performed coordination and synchronization information may be different for each gNBDU, as described above.

As another example, when the gNBCU receives an MBS session start message or an MBS session update message, the gNBCU may recognize whether the area where the MBS is provided includes a plurality of gNBDUs based on cell list information. For example, when the MBS is provided in one gNBDU based on cell list information, the gNBCU may not perform coordination and synchronization for the gNBDU. On the other hand, when the MBS provision area includes a plurality of gNBDUs based on the cell list information, the gNBCU may perform the above-described coordination and synchronization to perform synchronized transmission between the gNBDUs, as described above.

As a specific example, when the CU receives first reference time information from a first DU among at least one DU and receives second reference time information from a second DU among at least one DU, the CU may perform at least one of coordination or synchronization such that the first DU and the second DU simultaneously transmit data packets for a first MBS service through the first reference time information and the second reference time information, as described above. Here, the CU may transmit first time indication information to the first DU and transmit second time indication information to the second DU based on at least one of the performed coordination and synchronization. The first DU may determine the transmission time of the data packet for the first MBS service based on the first time indication information, and the second DU may determine the transmission time of the data packet for the first MBS service based on the second time indication information. For example, the transmission time of the data packet by the first DU may be determined to be the same as the transmission time of the data packet by the second DU, thereby preventing loss and duplicate transmission of data packets. Additionally, as an example, the first time indication information and the second time indication information may be different. Additionally, information for MBS provision transmitted to each of at least one DU may be transmitted to terminals respectively connected to at least one DU, as described above. Additionally, as an example, if the MBS provision area includes only one DU based on the MBS provision request information, the CU may not perform coordination and synchronization, but may not be limited to this.

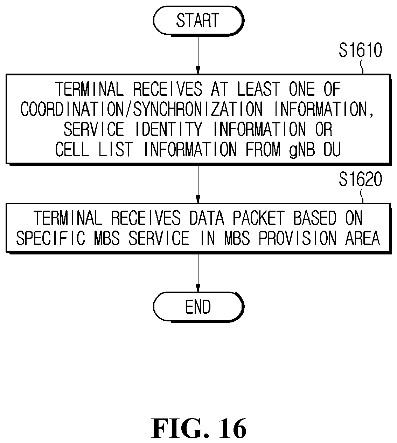

FIG. 16 is a flowchart showing a method of providing an MBS applicable to the present disclosure. Referring to FIG. 16, a terminal may receive a message containing at least one of coordination/synchronization information, service identity information, and cell list information from a gNBDU (S1610). As an example, an MBS provision area may include at least one gNBDU controlled by one gNBCU, as described above. Here, the terminal may receive a data packet based on a specific MBS service in the MBS provision area based on the above-described information (S1620). That is, the terminal may recognize that synchronized transmission of the data packet for the specific MBS service is performed in at least one gNBDU controlled by one gNBCU, and receive the data packet based on the above.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.

### Industrial Applicability

The embodiments of the present disclosure are applicable to various radio access systems. Examples of the various radio access systems include a 3^{rd} generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method of operating a central unit (CU) in a wireless communication system, the method comprising:
obtaining, by the CU, reference time information from each of at least one distributed unit (DU);
receiving, by the CU, a multicast broadcast service (MBS) provision request information from an access and mobility management function (AMF);
performing at least one of coordination or synchronization through the reference time information obtained from each of the at least one DU, in case that an MBS provision area includes a plurality of DUs based on the MBS provision request information; and
transmitting information for MBS provision to each of the at least one DU.

2. The method of claim 1, wherein the MBS provision request information comprises at least one of a service identity identifying a first MBS service or a list of cells specifying the first MBS service provision area.

3. The method of claim 2, wherein the MBS provision request information is transferred from the AMF to the CU based on at least one of a multimedia broadcast and multicast service (MBMS) session start request message or an MBMS session update request message.

4. The method of claim 1, wherein the reference time information received from each of the at least one DU comprises at least one of a system frame number (SFN), a subframe index or slot information.

5. The method of claim 4, wherein the coordination and the synchronization are performed using at least one of the SFN, the subframe index or the slot.

6. The method of claim 5, wherein the information for MBS provision transmitted from the CU to each of the at least one DU comprises at least one of a time indication, a service identity or a list of cells.

7. The method of claim 6, wherein each of the at least one DU determines a transmission time of a data packet for a first MBS service based on the received information for MBS provision.

8. The method of claim 5, wherein, in case that the CU receives first reference time information from a first DU among the at least one DU and receives second reference time information from a second DU among the at least one DU, the CU performs at least one of the coordination or the synchronization such that the first DU and the second DU simultaneously transmit data packets for the first MBS service through the first reference time information and the second reference time information.

9. The method of claim 8, wherein the CU transmits first time indication information to the first DU and transmits second time indication information to the second DU based on at least one of the coordination or the synchronization.

10. The method of claim 9, wherein the first DU determines a transmission time of the data packet for the first MBS service based on the first time indication information, and the second DU determines a transmission time of the data packet for the first MBS service based on the second time indication information.

11. The method of claim 10, wherein the transmission time of the data packet by the first DU is determined to be the same as the transmission time of the data packet by the second DU.

12. The method of claim 10, wherein the first time indication information and the second time indication information are different.

13. The method of claim 1, wherein the information for MBS provision transmitted to each of the at least one DU is transmitted to terminals respectively connected to the at least one DU.

14. The method of claim 1, wherein, in case that the MBS provision area includes only one DU based on the MBS provision request information, the CU does not perform the coordination and the synchronization.

15. A central unit (CU) operating in a wireless communication system, the CU comprising:
at least one transceiver;
at least one processor; and
at least one memory operatively connected to the at least one processor and configured to store instructions that, when executed, cause the at least one processor to perform a specific operation,
wherein the specific operation comprises:
controlling the transceiver to obtain reference time information from each of at least one distributed unit (DU);
controlling the transceiver to receive a multicast broadcast service (MBS) provision request information from an access and mobility management function (AMF);
performing at least one of coordination or synchronization through the reference time information obtained from each of the at least one DU, in case that an MBS provision area includes a plurality of DUs based on the MBS provision request information; and
controlling the transceiver to transmit information for MBS provision to each of the at least one DU.

16. A method of operating a terminal in a wireless communication system, the method comprising:
the terminal receiving at least one of coordination/synchronization information, a multicast/broadcast service (MBS) service identity information or cell list information from a distributed unit (DU); and
the terminal receiving a data packet based on the MBS service in an MBS provision area,
wherein, in case that the MBS provision area includes a plurality of DUs, a transmission time of the data packet is determined to be the same in the plurality of DUs through a central unit (CU).

17. A terminal operating in a wireless communication system, the terminal comprising:
at least one transceiver;
at least one processor; and
at least one memory operatively connected to the at least one processor and configured to store instructions that, when executed, cause the at least one processor to perform a specific operation,
wherein the specific operation comprises:
controlling the transceiver to receive at least one of coordination/synchronization information, a multicast/broadcast service (MBS) service identity information or cell list information; and
controlling the transceiver to receive a data packet based on the MBS service in an MBS provision area, and
wherein, in case that the MBS provision area includes a plurality of DUs, a transmission time of the data packet is determined to be the same in the plurality of DUs through a central unit (CU).

18. An apparatus comprising at least one memory and at least one processor functionally connected to the at least one memory, wherein the at least one processor controls the apparatus to:
obtain reference time information from each of at least one distributed unit (DU);
receive a multicast broadcast service (MBS) provision request information from an access and mobility management function (AMF);
perform at least one of coordination or synchronization through the reference time information obtained from each of the at least one DU, in case that an MBS provision area includes a plurality of DUs based on the MBS provision request information; and
transmit information for MBS provision to each of the at least one DU.

19. A non-transitory computer-readable medium storing at least one instruction, the non-transitory computer-readable medium comprising the at least one instruction executable by a processor,
wherein the at least one instruction controls an apparatus to:
obtain reference time information from each of at least one distributed unit (DU);
receive a multicast broadcast service (MBS) provision request information from an access and mobility management function (AMF);
perform at least one of coordination or synchronization through the reference time information obtained from each of the at least one DU, in case that an MBS provision area includes a plurality of DUs based on the MBS provision request information; and
transmit information for MBS provision to each of the at least one DU.
